# EUROPEAN PATENT APPLICATION

(11) **EP 1 724 326 A1**
(43) Date of publication of application: **22.11.2006**
(21) Application number: 05719094.4
(22) Date of filing: 14.02.2005
(51) Int. Cl.: C10J 3/00, B09B 3/00, C10L 3/06, C10L 3/10

(54) **SYSTEM FOR GASIFICATION OF BIOMASS AND METHOD FOR OPERATION THEREOF**

(30) Priority: 03.03.2004 JP 2004059731
(71) Applicant: Chugai Ro Co., Ltd., Osaka-shi, Osaka 550-0003 (JP)
(72) Inventor: ITO, Yoshifumi, c/o CHUGAI RO CO., LTD., Osaka-shi, Osaka 5500003 (JP); FUKUSHIMA, Masahiro, c/o CHUGAI RO CO., LTD., Osaka-shi, Osaka 5500003 (JP); SASAUCHI, Kenichi, c/o CHUGAI RO CO., LTD., Osaka-shi, Osaka 5500003 (JP)
(74) Representative: Oser, Andreas
(86) International application number: PCT/JP2005/002147
(87) International publication number: WO 2005/085397

(57) **Abstract**

**Purpose**

A biomass gasification system and operating method thereof are able to prevent hindrances caused by the tar component in a fuel gas and to thermally utilize a fuel gas containing a tar component.

**Means**

A gas reforming tower 4, able to thermally crack the tar component in a fuel gas by increasing the temperature thereof to a process temperature, is connected to a gas supply system 3, which routes a biomass-source fuel gas generated by a gasification furnace 1, to a utilization system 2. Fuel gas from the gas reforming tower is routed through a fuel gas induction system 5 to the gasification furnace for use as fuel therein during the time required for the gas reforming tower to attain the process temperature.

## Description

### Technical Field

The invention relates to a biomass gasification system and operating method thereof which suppresses the generation of hindrances originating in the tar component within a fuel gas and which makes effective thermal use of a tar-containing fuel gas.

### Related Art

A known biomass gasification system generates fuel gas through a process by which biomass such as wood chips or poultry manure is thermally cracked in a non-oxidizing environment of a gasification furnace at temperatures from 600°C to 900°C. This system gasifies the combustible organic component of the biomass within a temperature range from 200°C to 600°C. The fuel gas thus obtained is sent through a supply system to an electrical generating system equipped with a combustion engine, gas engine, fuel cell and so on. This type of biomass-based electrical generating system has been looked upon with increasing interest recently.

Fuel gas generated by a gasification furnace contains a tar component made up of a high polymer hydrocarbon. The tar component, while in a gaseous state at temperatures above 350°C, coagulates at lower temperatures which results in the problems of the tar adhering to internal components and blocking passages. The applicant has previously submitted a Japanese patent application (Japanese Patent Application No. 2003-292568) for a fuel gas quality improvement device which is installed to a biomass gasification system and eliminates the problems caused by the tar component in a fuel gas. This device includes a porous thermal storage body, through which the fuel gas flows, connected to a fuel gas passage, the porous thermal storage body being maintained at a temperature of more than 1,100°C. Heating the tar component to a temperature greater than 1,100°C induces a thermal cracking reaction which eliminates the tar component. The aforesaid fuel gas quality improvement device employs a process temperature greater than 1,110°C through the addition of pure oxygen or air to the fuel gas so as to induce an oxidation reaction which raises the fuel gas temperature.

### Disclosure of the Invention

### Shortcomings Resolved by the Invention

The temperature of the fuel gas supplied by the gasification furnace is approximately 600°C. A considerable amount of time is required to raise this temperature to the process temperature of 1,100°C through an oxidation reaction induced by the addition of oxygen only, thus making it impossible to remove the tar component during the rise time to process temperature. More specifically, the temperature of the fuel gas quality improvement device is equivalent to that of the fuel gas when the initial generation of fuel gas occurs after the biomass first enters the gasification furnace. Therefore, the tar component cannot be thermally cracked during the time required for the fuel gas quality improvement device to reach the process temperature.

Various problems occur if a fuel gas containing a tar component is supplied to a utilization system such as gas engine or fuel gas combustion device. A cooling device, such as a cooling tower or like device, which has the purpose of washing the fuel gas after it passes through the fuel gas quality improvement device, may be installed to the supply lines which feed the fuel gas to the utilization system. The cooling operation causes the tar component to coagulate within the cooling device, thus clogging the cooling device components with tar. There are problems which may prevent the continuous operation of the system and necessitate periodic maintenance work to remove the accumulated tar.

After thorough consideration of the aforesaid problems, the inventor of the present invention, in order to resolve the previously noted problems relating to the tar component in a fuel gas, puts forth a biomass gasification system and operating method thereof capable of preventing tar component obstacles from the system and thermally utilizing fuel gas containing the tar component.

### Means of Overcoming Shortcomings in the Related Art

The biomass gasification system specified by the invention comprises;
a gasification furnace which generates a fuel gas from biomass;
a reforming device which attains a process temperature at which the tar component within the fuel gas is thermally cracked, the reforming device being installed to a supply system which supplies fuel gas from the gasification furnace to a utilization system; and
a fuel gas induction system which feeds the fuel gas from the reforming device to the gasification furnace for use as fuel to power the operation of the gasification furnace during the time when the reforming device has not yet reached the process temperature.

Moreover, combustion turning control means is provided to select between a petroleum-based fuel or fuel gas as the fuel to be supplied to and combusted in the gasification furnace.

Furthermore, the operating method of the biomass gasification system invention includes a step of directing fuel gas, which has been generated from biomass in a gasification furnace, from a reforming device within which the temperature of the fuel gas is increased to a point at which tar component within the fuel gas may be thermally cracked, to the gasification furnace for use as fuel therein during the time when the temperature of the reforming device is below the process temperature.

Moreover, initial operation of the gasification furnace is based on the combustion of a petroleum-based fuel after which the combustion in the gasification furnace is based on fuel gas supplied from the reforming device during the time when the temperature in the reforming device is below the process temperature.

### Effect of the Invention

The biomass gasification system and operating method invention prevent hindrances caused by the tar component within a fuel gas and also makes effective thermal use of a fuel gas containing a tar component.

### Preferred Embodiments of the Invention

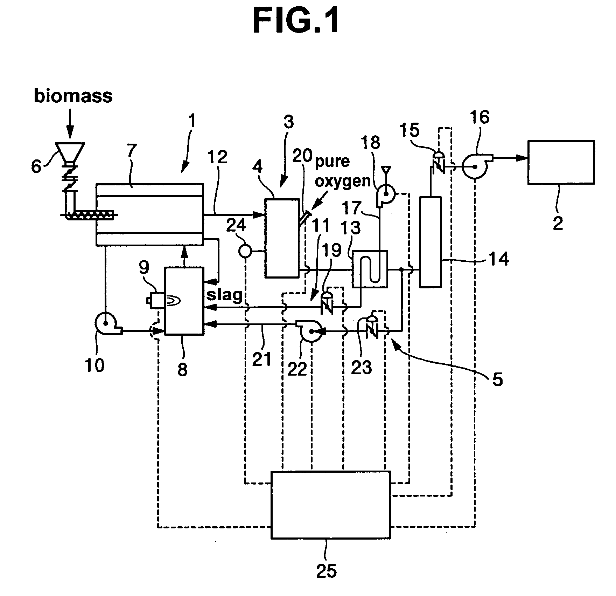

The following will describe a preferred embodiment of the biomass gasification system and operating method invention with reference to the attached drawings. The basic configuration of the embodied biomass gasification system can be seen in Fig. 1 which describes
a gasification furnace 1 which generates fuel gas from biomass;
a reforming device, in the form of a gas reforming tower 4, which is installed to a supply system 3 through which fuel gas from the gasification furnace 1 is fed to a utilization system 2, gas reforming tower 4 being capable of raising the temperature of the fuel gas to a process temperature at which the tar component within the fuel gas may be thermally cracked; and
a fuel gas induction system 5 through which fuel gas from the gas reforming tower 4 is supplied to the gasification furnace 1 for use as fuel gas therein during the time when the gas reforming tower 4 has not yet attained the process temperature.

Gasification furnace 1 includes a furnace unit 7 in which fuel gas is generated at a temperature from 600°C to 900°C from biomass supplied by a biomass feed unit 6, and a thermal airflow generator 8, as a thermal source, which generates a thermal airflow at a temperature from 800 to 1,000°C supplied to the furnace unit 7 for the thermal process therein. A burner 9 is installed to thermal airflow generator 8 as means of generating a thermal airflow from the combustion of a petroleum-based fuel such as kerosene or heavy oil. The thermal airflow generated by the thermal airflow generator 8 is circulated between the furnace unit 7 and thermal airflow generator 8 by a thermal airflow circulation fan 10. Moreover, the carbide slag which remains after fuel gas generation in furnace unit 7 and the fuel gas from the fuel gas induction system 5 are applied as the fuels for the combustion which generates the thermal airflow in the thermal airflow generator 8. A combustion air supply system 11, which is connected to the thermal airflow generator 8, supplies combustion air to the thermal airflow generator 8 in order to maintain combustion therein.

The supply system 3 includes
a supply line 12 connecting the gasification furnace 1 with a utilization system 2 which may be a gas engine or other like device and carrying fuel gas thereto;
a heat exchanger 13 connected to the supply line 12 as means of recovering thermal energy from the fuel gas flowing therethrough;
a gas cooling tower 14 connected to the supply line 12 at a point downstream from the heat exchanger 13 as means of washing the fuel gas by cooling;
an adjustably openable supply system damper 15 connected to the supply line 12 at the discharge side of the gas cooling tower 14 and opened variably as means of controlling pressure within the gasification furnace 1; and
a supply system fan 16, installed to the supply line 12 between the supply system damper 15 and the utilization system 2, as means of extracting fuel gas from the gasification furnace 1.
Therefore, opening the supply system damper 15 allows the supply system fan 16 to send the fuel gas generated by the gasification furnace 1 to the utilization system 2.

Combustion air supply system 11 is connected to thermal airflow generator 8, thereby allowing the combustion air supplied to the thermal airflow generator 8 to be heated by thermal energy recovered by heat exchanger 13.
Combustion air supply system 11 includes
a supply duct 17 which connects to thermal airflow generator 8 and carries combustion air thereto;
a combustion air fan 18 which drives combustion air through supply duct 17; and
an air control damper 19 which is installed to on the way of supply duct 17 with the purpose of controlling the airflow volume by opening the supply duct 17 to an extent able to maintain the temperature of the fuel gas heat exchanger outlet, e.g. at approximately 400°C.

The gas reforming tower 4, which is installed to supply line 12 of supply system 3 between gasification furnace 1 and heat exchanger 13, has the purpose of removing the tar component from the fuel gas exiting the gasification furnace 1. A control nozzle 20 is installed to the internal part of the gas reforming tower 4 with the purpose of raising the temperature of the fuel gas therein through an oxidation reaction induced by the injection and mixing of pure oxygen or air therein. The external part of gas reforming tower 4 comprises an insulating structure formed over heat-resistant steel. A part of the thermal energy from the gas within the gas reforming tower 4 is consumed from the thermal accumulation and radiation operation occurring in the gas reforming tower 4 itself. The temperature within the gas reforming tower 4 at the start of the temperature rise period is equivalent to that of the fuel gas which initially passes through the gas reforming tower 4. This is followed by a gradual rise in temperature as a result of the oxidation reaction. During normal operation of the system, this temperature rises over 1,100°C to be thermally able to crack the tar component within the fuel gas to enable a thermal treatment which removes the tar component from the fuel gas.

The fuel gas induction system 5 includes an induction line 21 branched off from the supply line 12 at a location between the gas reforming tower 4 and heat exchanger 13 and connected to the thermal airflow generator 8. Fuel gas flows through the induction line 21, after having been heated to a temperature over 350°C by previous passage through heat exchanger 13.
Fuel gas induction system 5 also includes
induction system fan 22 which connects to induction line 21 as means of drawing in fuel gas from supply line 12;
an adjustably openable induction system damper 23 which is installed to induction line 21, at a location upstream to induction system fan 22 and is incorporated with supply system damper 15, as means of controlling the internal pressure of the gasification furnace 1; and
a thermal sensor 24 such a thermocouple or the like which monitors the output temperature of the gas reforming tower 4.
The fuel gas induction system 5 further includes a control unit 25 which, when a temperature is input from the thermal sensor 24 indicating that the temperature of the gas reforming tower 4 is below the required process temperature, outputs control signals to establish the extent of opening of induction system damper 23 and the speed of induction system fan 22 as means of determining the amount of fuel gas fed from gas reforming tower 4 to thermal airflow generator 8.

When the control unit 25 receives a signal from the thermal sensor 24 notifying that the monitored temperature of the gas reforming tower 4 is below process temperature, it opens the induction system damper 23 and initiates operation of the induction system fan 22, thereby drawing fuel gas from supply line 12 at a position between the gas reforming tower 4 and heat exchanger 13 into induction line 21 of fuel gas induction system 5, and subsequently into thermal airflow generator 8. In this embodiment, the control unit 25 also outputs control signals to control the operation of the supply system damper 15 and the supply system fan 16 in the supply system 3. The control unit 25 closes the supply system damper 15 and stops the operation of supply system fan 16 as required when fuel gas is supplied to the thermal airflow generator 8. Conversely, when the temperature of gas reforming tower 4 rises above the process temperature, the control unit 25 closes the induction system damper 23, stops operation of the induction system fan 22, opens the supply system damper 15, and activates the supply system fan 16, thereby directing the flow of fuel gas through the supply line 12 to the gas cooling tower 14.

Moreover, the control unit 25 also provides the combustion turning control means outputting signals which are able to initiate or terminate operation of the burner 9 as well as control the extent of combustion occurring therein, so that either a petroleum-based fuel or fuel gas passing through the fuel gas induction system 5 may be supplied as the fuel used for combustion in the thermal airflow generator 8. Furthermore, the control unit 25 may, in order to provide complete operational control of the biomass gasification system, output signals which control the extent of opening of the air control damper 19 in the combustion air supply system 11, the operation of the combustion air fan 18, and the operation of control nozzle 20.

The following will describe the operating method of the biomass gasification system invention. When the biomass gasification system begins operation, the temperature within the gas reforming tower 4 during the temperature rise time is lower than the process temperature at which the tar component may be removed from the fuel gas. The temperature in the gas reforming tower 4 is monitored by the thermal sensor 24, and a signal relating to the aforesaid temperature is output to the control unit 25.

When the biomass gasification system begins operation, thermal airflow generator 8 begins generating a thermal airflow while biomass is fed into the furnace unit 7 by the biomass feed system 6 in the gasification furnace 1. When the thermal airflow generator 8 is activated, the control unit 25 ignites the burner 9 in order to initiate combustion of a petroleum-based fuel to generate the thermal airflow. The control unit 25 also concurrently operates the air control damper 19 and the combustion air fan 18 of the combustion air supply system 11 to the extent required to supply adequate combustion air to thermal airflow generator 8. The thermal airflow generated by the thermal airflow generator 8 is circulated by thermal airflow circulation fan 10 between thermal airflow generator 8 and furnace unit 7 to subject the biomass within the furnace unit 7 to a heat treatment resulting in the gradual generation of fuel gas. Moreover, a residual carbide slag is concurrently generated and fed to the thermal airflow generator 8 to be used as fuel.

At the point of initial generation of fuel gas in the gasification furnace 1, control unit 25 starts controlling to supply pure oxygen or other like substance to gas reforming tower 4 through the control nozzle 20, and to supply fuel gas to thermal airflow generator 8, through the fuel gas induction system 5, based on the signal from thermal sensor 24 indicating that the monitored temperature in the gas reforming tower 4 is below the process temperature. Specifically, control unit 25 activates induction system fan 22 and opens induction system damper 23 in fuel gas induction system 5, in order to adjust the pressure within the furnace unit 7 to approximately -20Pa. Control unit 25 will also maintain supply system damper 15 in supply system 3 in a closed condition as required. The suction created by the induction system fan 22 causes the fuel gas to flow from the gasification furnace 1, into supply line 12 of supply system 3, and then into the gas reforming tower 4. The temperature of the fuel gas exiting gasification furnace 1 is approximately 600°C.

The mixing of pure oxygen with the fuel gas in the gas reforming tower 4 induces an oxidation reaction which generates heat through which the temperature within the gas reforming tower 4 gradually rises. For example, the control unit 25 may operate control nozzle 20 to establish a thermal rise time of 500°C per hour in the gas reforming tower 4. At the point in time at which fuel gas generation commences, the temperature within the gas reforming tower 4 may be equivalent to the fuel gas supplied thereto. As this temperature has not yet risen to 1,100°C, which is the process temperature at which the tar component is removed, the fuel gas flows out of the gas reforming tower 4 still carrying the tar component. This fuel gas which exits the gas reforming tower 4 at a temperature in the region of 600°C flows to the heat exchanger 13, and lowers at a temperature of approximately 400°C as a result of heating combustion air. The fuel gas, which exits the heat exchanger 13 at a temperature greater than 350°C and still contains the tar component, is driven by induction system fan 22, through induction line 21, to the thermal airflow generator 8 where it is combusted.

When the biomass gasification system begins operation, the aforesaid residual slag is fed to the thermal airflow generator 8, along with the fuel gas fed thereto via fuel gas induction system 5, where the oxidation reaction of slag and fuel gas is induced by the injection of combustion air from combustion air supply system 11, thus enabling generation of the thermal airflow. The control units 25 ignites the burner 9 using petroleum-based fuel at a time of starting operation of the thermal airflow generator 8, proceed turn-down operation of the burner 9 based on the rise of temperature of the thermal airflow generator 8 with the supply of residual slag and fuel gas, and then extinguishes the burner 9 at the point where the generation of the thermal airflow from the residual slag and fuel gas may be self-maintained. Moreover, the control unit 25, by controlling the extent of opening of the air control damper 19, is able to adjust the volume of combustion air supplied to the thermal airflow generator 8 in order to maintain a uniform temperature therein.

The above-noted control operation is executed to send fuel gas from the gas reforming tower 4 to the thermal airflow generator 8, through the fuel gas induction system 5, during the time required for the temperature in the gas reforming tower 4 to reach the process temperature.

It thus becomes possible for the tar component within the fuel gas to be removed through a thermal cracking process when the temperature within the gas reforming tower 4 reaches the process temperature which has been induced by the oxidation reaction of the fuel gas and pure oxygen. The fuel gas, from which the tar component has been removed, then flows out of the gas reforming tower 4. When the process temperature has been detected by the thermal sensor 24, the control unit 25 routes the flow of fuel gas through supply system 3 to a fuel gas utilization system 2, such as a gas engine.

More specifically, the control unit 25 executes a control process which gradually closes the induction system damper 23, opens the supply system damper 15, activates the supply system fan 16, and terminates operation of the induction system fan 22. As a result, the fuel gas from gasification furnace 1 flows through and is washed by the gas cooling tower 14 after which the cleaned fuel gas is supplied to the fuel gas utilization system 2. Once the fuel gas is supplied to the utilization system 2, the flow of fuel gas to the thermal airflow generator 8 is terminated. At this time, however, a large amount of residual slag is being generated in the gasification furnace 1, slag as a combustion fuel which may be used by the thermal airflow generator 8, thus allowing the thermal airflow generator 8 to maintain generation of the thermal airflow. Also, the burner 9 may be activated again as required.

The following describes how operation of the biomass gasification system is terminated. The control unit 25 turns off the supply of pure oxygen through the control nozzle 20, thus gradually lowering the temperature within the gas reforming tower 4. Because the temperature within the gas reforming tower 4 falls below the process temperature, the control unit 25 directs the flow of fuel gas into the fuel gas induction system 5, thus the fuel gas containing the tar component is burned off within the thermal airflow generator 8.

With respect to the above-noted embodiment of the biomass gasification system and operating method thereof, in cases where the process temperature, that is, the temperature at which the tar component is thermally cracked and removed from the fuel gas, has not been attained within the gas reforming tower 4, the fuel gas, which is at a temperature above 350°C and still contains the tar component, is sent from the gas reforming tower 4, through the fuel gas induction system 5, to the thermal airflow generator 8 for combustion therein. As a result of this operation, not only the generation of pollution and the possibility of tar-induced blockage, but also the need to perform tar removal maintenance in the supply system 3 (e.g. gas cooling tower 14 and utilization system 2), is eliminated. Moreover, this system is able to combust the tar component-containing fuel gas within the thermal airflow generator 8, and thus makes effective use of the thermal energy contained in the tar component.

Furthermore, control unit 25 is able to select either a fossil fuel or fuel gas as the fuel to be combusted by the thermal airflow generator 8, thus allowing initial operation of the thermal airflow generator 8 to be based on a fossil fuel with subsequent operation being based on fuel gas supplied from the gas reforming tower 4 during the period in which the temperature within the gas reforming tower 4 has not yet attained the process temperature. Therefore, during the time when the fuel gas with tar component flowing through the gas reforming tower 4 has not yet reached the process temperature, that is, the time during which the biomass gasification system is initiating operation, it becomes possible to make efficient thermal use of the fuel gas to power the gasification furnace 1, and therefore to lower fuel consumption of the biomass gasification system by using less fossil fuel during initial operation.

### Brief Description of the Drawings

Fig. 1 is a schematic drawing describing a preferred embodiment of the biomass gasification system of this invention.

## Claims

1. A biomass gasification system comprising;
a gasification furnace which generates a fuel gas from biomass;
a reforming device which attains a process temperature at which the tar component within the fuel gas is thermally cracked, said reforming device being connected to a supply system which feeds fuel gas from said gasification furnace to a utilization system; and
a fuel gas induction system able to feed the fuel gas from said reforming device to said gasification furnace for use as fuel to power the operation of said gasification furnace during the time when said reforming device has not yet attained a process temperature.

2. A biomass gasification system according to claim 1, wherein combustion turning control means is provided to select a fossil fuel or fuel gas as the fuel to be combusted to drive the gasification furnace.

3. A biomass gasification system operating method comprising;
a step that fuel gas is directed from a reforming device, within which the temperature of the fuel gas is increased to a point at which the tar component within the fuel gas generated from biomass in a gasification furnace is thermally cracked, to said gasification furnace for use as fuel to be combusted by said gasification furnace during the time when the temperature of said reforming device is below a process temperature.

4. A biomass gasification system operating method according to claim 3, wherein initial operation of said gasification furnace is driven by the combustion of fossil fuel after which said gasification furnace operation is powered by the combustion of fuel gas supplied from said reforming device during the time when the temperature of said reforming device is below the process temperature.
